# NEUE EUROPÄISCHE PATENTSCHRIFT

(11) **EP 0 766 713 B2**
(45) Veröffentlichungstag und Bekanntmachung des Hinweises auf die Entscheidung über den Einspruch: **22.10.2003**
(45) Hinweis auf die Patenterteilung: 08.04.1998
(21) Anmeldenummer: 95936529.7
(22) Anmeldetag: 20.10.1995
(51) Int. Cl.: C08J 9/12, C09K 3/30

(54) **FLÜSSIGES KOHLENDIOXID ENTHALTENDE TREIBMITTEL**
FOAMING AGENTS CONTAINING LIQUID CARBON DIOXIDE
AGENTS D'EXPANSION CONTENANT DU DIOXYDE DE CARBONE LIQUIDE

(30) Priorität: 02.11.1994 DE 4439082; 28.01.1995 DE 19502708
(43) Veröffentlichungstag der Anmeldung: 09.04.1997
(73) Patentinhaber: Solvay Fluor und Derivate GmbH, 30173 Hannover (DE)
(72) Erfinder: KRÜCKE, Werner, D-30163 Hannover (DE)
(74) Vertreter: Gosmann, Martin
(86) Internationale Anmeldenummer: EP9504122
(87) Internationale Veröffentlichungsnummer: WO96014354

(56) Entgegenhaltungen:
- EP-A- 0 155 876
- EP-A- 0 464 581
- WO-A-91/08243
- WO-A-91/12287
- WO-A-94/17133
- DE-A- 3 923 913
- DE-A- 4 025 843
- JP-A- 51 123 274
- US-A- 3 184 419
- US-A- 4 337 318
- US-A- 4 464 484
- US-A- 5 081 162
- US-A- 5 348 984
- DATABASE WPI Section Ch, Week 8947 Derwent Publications Ltd., London, GB; Class A17, AN 89-343299 & JP,A,01 254 742 ( SEKISUI PLASTICS KK) , 11.Oktober 1989
- DATABASE WPI Section Ch, Week 7746 Derwent Publications Ltd., London, GB; Class A13, AN 77-81827Y & JP,A,52 117 957 ( ASAHI DOW KK) , 3.Oktober 1977
- JOURNAL OF CELLULAR PLASTICS, Bd. 27, Nr. 2, 1.März 1991 Seiten 192-205, XP 000238081 HUBER L M ET AL 'ALTERNATE BLOWING AGENTS IN PMDI AND TDI APPLIANCE FOAMS'
- Proceedings 35th Annual Polyurethane Technical Marketing Conference, p. 12

## Beschreibung

Die Erfindung betrifft ein Verfahren zur Herstellung geschäumter Kunststoffe unter Verwendung von flüssiges kohlendioxid enthaltenden Treibmitteln.

Die Erfindung betrifft auch ein Verfahren zur Herstellung von Ein- oder Mehrkomponenten-Polyurethanschaumstoffen aus Druckbehältem.

Der Einsatz von Fluorchlorkohlenwasserstoffen (FCKWs) als Treibmittel bei der Herstellung geschäumter Kunststoffe ist aus ökologischen Gründen nicht mehr wünschenswert. Als Ersatzstoffe sind bisher auch gasförmige Substanzen, wie z. B. Kohlendioxid, vorgeschlagen worden. Kohlendioxid als gasförmiges physikalisches Treibmittel hat aber den Nachteil, daß es sich aufgrund seiner relativ niedrigen kritischen Temperatur bei der während der Produktion von Kunststoffschäumen herrschenden Bedingungen nur recht schwierig dosieren läßt. Weiterhin führt der Einsatz von Kohlendioxid nach bisher bekannten Verfahren zumeist zu offenzelligen Schaumstoffen mit einem unerwünscht hohen Wasseraufnahmevermögen und einer oft noch unbefriedigenden Wärmedämmung. Auch ist bisher die Herstellung geschäumter Kunststoffe mit vorwiegend geschlossenen Zellen bei der Verwendung von Kohlendioxid als alleinigem Treibmittel oder als Co-Treibmittel in Kombination mit anderen physikalischen Treibmitteln noch mit Schwierigkeiten verbunden.

Einkomponenten- bzw. Mehrkomponenten-Polyurethanschäume, die aus einem Druckbehälter, z. B. einer Sprühdose, abgegeben werden, werden hauptsächlich zur Aufschäumung von Hohl- oder Zwischenräumen im Bauwesen oder im Automobilbau eingesetzt. Beim sogenannten Einkomponenten-Polyurethanschaum (nachfolgend 1K-PUR-Schaum genannt) wird eine Polyolvormischung zusammen mit einem Überschuß an Di- und/oder Polyisocyanat in Gegenwart eines Katalysators und gegebenenfalls weiterer Hilfs- und Zusatzstoffe in einem Druckbehälter zu einem Isocyanatgruppen enthaltenden Prepolymar umgesetzt. Durch Betätigung des Sprühventils des Druckbehälters wird das Prepolymer durch ein Treibmittel aus der Dose herausgedrückt, wobei es zu einer spontanen Aufschäumung des Prepolymers kommt. Durch Reaktion der noch vorhandenen Isocyanatgruppen mit der Luftfeuchtigkeit entsteht ein weitgehend geschlossenzelliger Hartschaum.

Beim Zweikomponentenpolyurethanschaum (nachfolgend 2K-PUR-Schaum genannt) benötigt man zum Aushärten des Prepolymer-Schaumes eine weitere Hydroxygruppen tragende Komponente, z. B. ein Polyol, weiches erst unmittelbar vor der Schaumbildung zugesetzt wird. Üblicherweise befindet sich dieses Polyol im Druckbehälter in einem von den übrigen Komponenten abgetrennten Füllraum und wird durch Betätigung des Sprühventils erst unmittelbar vor Austritt aus dem Druckbehälter der prepolymeren Komponente zugesetzt.

Die meisten für die Anwendung aus Druckbehältem eingesetzten Prepolymere für PUR-Schäume besitzen eine sehr hohe Viskosität, so daß die eingesetzten Treibmittel gute Lösungsmitteleigenschaften besitzen sollten, um die Komponenten problemlos aus dem Druckbehälter heraus verschäumen zu können. Der Einsatz von Fluorchlorkohlenwasseratoffen (FCKWs) als Treibmittel für derartige Anwendungen ist aus ökologischen Gründen nicht mehr wünschenswert. Viele der bisher vorgeschlagenen Ersatzstoffe zeigen noch anwendungstechnische Nachteile wie z. 3. eine noch unbefriedigende Wärmedämmung oder zu geringe Verdampfungsgeschwindigkeit.

Die Internationale Patentanmeldung WO 91/12287 offenbart, daß man flüssiges CO₂ mit Co-Treibmitteln, beispielsweise Wasser oder höher siedenden Lösungsmitteln, einsetzen kann. Man kann auf diese Weise eine kontrollierte Pre- und Post-Expansion des Schaumes bewirken.

Die japanische Patentanmeldung JP-A 52 117 957 offenbart, daß man Polyethylenharze mit einer Mischung von CO₂ und einem leichtflüchtigen organischen Treibmittel verschäumen kann.

Die Internationale Patentanmeldung WO 91/08243 betrifft die Herstellung offenporiger Polyurethan-Schäume. Vorzugsweise wird flüssiges CO₂ als Treibmittel eingesetzt, das noch Wasser oder andere Treibmittel in kleinen Mengen enthalten kann.

Aufgabe der Erfindung war es daher, neue Verfahren zur Herstellung geschäumter Kunststoffe, und auch für die Erzeugung von PUR-Schaumen aus Druckbehältern, zur Verfügung zu stellen, welche die bisherigen Nachteile des Standes der Technik überwinden, wobei für diese Verfahren geeignete neue Treibmittelzusammensetzungen verwender weiten sollen.

Überraschend wurde nun gefunden, daß Zusammensetzungen, welche neben mindestens einer weiteren flüssigen Komponente Kohlendioxid in flüssiger Form enthalten, sich als Treibmittelzusammensetzungen in Verfahren zur Herstellung geschäumter kunststoffe eignen. Treibmittelzusammansetzungen, welche verflüssigtes Kohlendioxid enthalten, eignen sich auch zur Erzeugung von PUR-Schäumen aus Druckbehältem.

Zusätzlich zum flüssigen CO₂ ist mindestens eine weitere flüssige oder druckverflüssigte Komponente enthalten. Diese weitere flüssige Komponente oder die weiteren flüssigen Komponenten stellen vorzugsweise den Rest auf 100 Gew.-% der Treibmittelzusammensetzung dar. Bei der oder den weiteren flüssigen Komponenten kann es sich beispieisweise um flÜssige oder druckverflüssigte physikalische Treibmittel und/oder um flüssige Flammschutzmittel, beispielsweise aus der Gruppe der Phosphatester oder Phosphonsäureester, handeln. Außerdem können zusätzlich auch noch bekannte Zusatz- und Hilfsstoffe wie Stabilisatoren oder Weichmacher enthalten sein.

Gegenstand der Erfindung ist ein Verfahren zur Herstellung geschäumter Kunststoffe mit Hilfe von Treibmitteln, bei dem man eine flüssige Treibmittelzusammensetzung einsetzt, welche 5 bis 50 Gew.-%, insbesondere 10 bis 50 Gew.-%, ganz besonders 10 bis 20 Gew.-%, verflüssigtes Kohlendioxid enthält.

Verflüssigtes Kohlendioxid im Sinne der Erfindung kann nach allen an sich bekannten Verfahren zur Gasverflüssigung, vorzugsweise durch Druckverflüssigung erhalten werden.

Kohlendioxid ist bei Raumtemperatur unter Normaldruck (1,01325 • 10⁵Pa) ein farbloses Gas, welches sich durch Anwendung eines Druckes von 56,5 atm (=5,72486 • 10⁶Pa) bei 20 °C zu einer farblosen, leicht beweglichen Flüssigkeit druckverflüssigen läßt Verfahren zur Druckverflüssigung von Kohlendioxid sind allgemein bekannt.

Eine Ausführungsform der vorliegenden Erfindung bezieht sich auf die Herstellung von geschäumten Kunststoffen, beispielsweise durch das Gieß- oder Extrusionsverfahren. Eine andere Ausführungsform der Erfindung, die später erläutert wird, betrifft speziell die Herstellung von Ein- oder Zweikomponenten-Polyurethanschaumstoffen aus Druckbehältem (PUR = Polyurethan). Im folgenden wird zunächst die erstgenannte Ausführungsform näher erläutert.

Als weitere flüssige Komponenten neben dem druckverflüssigten Kohlendioxid sind bei der Herstellung geschäumter Kunststoffe alle üblichen flüssigen physikalischen Treibmittel, nämlich leichtflüchtige organische Verbindungen wie Ether, z. B. Diethylether, Ketone wie Aceton, Kohlenwasserstoffe wie Pentan, Hexan, Heptan, Benzingemische, halogenhaltige Kohlenwasserstoffe oder halogenhaltige Ether verwandbar. Auch unter Druck verflüssigte Gase wie z. B. Propan oder Butan können neben dem verflüssigten Kohlendioxid eingesetzt werden. Weiterhin kommt als flüssige Treibmittelkomponente Wasser in Frage.

Bevorzugt setzt man zur Herstellung geschäumter Kunststoffe eine Treibmittelzusammensetzung ein, welche 10 bis 20 Gewichtsteile verflüssigtes Kohlendioxid und 30 bis 90 Gewichtsteile mindestens eines flüssigen oder unter Druck verflüssigten physikalischen Treibmittels aus der Gruppe Alkohole mit 1 bis 5 Kohlenstoffatomen, aliphatische Kohlenwasserstoffe mit 2 bis 12 Kohlenstoffatomen, cyclische Kohlenwasserstoffe mit 3 bis 12 Kohlenstoffatomen, halogenhaltige Kohlenwasserstoffe mit 1 bis 5 Kohlenstoffatomen oder halogenhaltige Ether mit insgesamt 2 bis 6 Kohlenstoffatomen enthält oderdaraus besteht, ein. Als Alkohole sind dabei insbesondere Ethanol und Isopropanol bevorzugt. Beispiele für aliphalische Kohlenwasserstoffe sind Pentan, Hexan, Heptan sowie Benzinfraktionsn, insbesondere Leichtbenzine mit einem Siedepunkt im Bereich von 15 bis 80 °C. Femer können auch als flüssige Treibmittelkomponente die niedersiedene Fraktionen, wie z. B. Propan und/oder Butan, druckverflüssigt eingesetzt werden. Beispiele für cyclische Kohlenwasserstoffe sind cycloaliphatische Kohlenwasserstoffe, vorzugsweise Cyclopropan, Cyclopentan und Cyclohexan. Unter halogenhaltigen Kohlenwasserstoffen werden Wasserstoff enthaltende Fluorkohlenwasserstoffe verstanden. Beispiele für Fluorkohlenwasserstoffe sind Pentafluorethan (R125), 1,1,1,2-Tetrafluorethan (R134a), 1,1,1-Trifluorethan (R143a), 1,1,2-Trifluorethan (R143), 1,1-Difluorethan (R152a), 1,1,1,3,3-Pentafluorpropan (R245fa) Octafluorpropan (R218), oder auch 1,1,1,3,3-Pentafluorbutan (R365mfc). Unter halogenhaltigen Ethem werden Wasserstoff enthaltende Fluorchlor- oder Fluorether, wie z. B. Difluormethoxy-2,2,2-trifluorethan (E245) verstanden.

Vorzugsweise wird eine Treibmittelzusammensetzung eingesetzt, welche 10 bis 20 Gewichtsteile verflüssigtes Kohlendioxid und 30 bis 90 Gewichtsteile mindestens eines halogenhaltigen Kohlenwasserstoffes oder eines aliphatischen Kohlenwasserstoffes oder eines halogenhaltigen Ethers enthält oder aus dem genannten Gemisch besteht.

Besonders bevorzugt wird in dem erfindungsgemäßen Verfahren eine Treibmittelzusammensetzung eingesetzt, welche 10 bis 20 Gewichtsteile verflüssigtes Kohlendioxid und 30 bis 90 Gewichtsteile 1,1-Difluorethan (R152a) enthält oder daraus be-steht. Ebenfalls besonders bevorzugt ist eine Treibmittelzusammensetzung, welche 10 bis 20 Gewichtsteile verflüssigtes Kohlendioxid, 50 bis 70 Gewichtsteile 1,1-Difluorethan (R152a) und 20 bis 35 Gewichtsteile Ethanol enthält oder aus dem Gemisch besteht Unter den halogenhaltige Ether anthaltenden erfindungsgemäßen Zusammensetzungen sind solche Treibmittelzusammensetzungen besonders bevorzugt, welche 10 bis 20 Gewichtsteile verflüssigtes Kohlendioxid und 80 bis 90 Gewichtsteile Difluormathoxy-2,2,2-Trifluorethan (E245) enthalten oder aus solchen Gemischen bestehen. Von den aliphatischen Kohlenwasserstoffen ist besonders n-Pentan bevorzugt. Vorzugsweise sollte eine aliphatische Kohlenwasserstoffe enthaltende erfindungsgemäße Zusammensetzung 10 bis 20 Gewichtsteile verflüssigtes Kohlendioxid und 80 bis 90 Gewichtsteile n-Pentan sowie gegebenenfalls zusätzlich noch 1 bis 3 Gewichtsteile Wasser enthalten oder aus einem solchen Gemisch bestehen.

Bei all diesen Treibmittelgemischen kann durch Einsatz des flüssigen CO₂ die Einsatzmenge an den anderen Treibmittein reduziert werden. CO₂ ist physiologisch unbedenklich und umweltverträglich.

Zweckmäßigerweise wird das erfindungsgemäße Verfahren zur Herstellung geschäumter Kunststoffe als Gießverfahren oder Extrusionsverfahren durchgeführt. Beim Extrusionsverfahren werden für die Herstellung von geschäumten Kunststoffen geeignete Mischungen direkt zu geschäumten Platten, Folien, Formkörpem, Profilen oder Partikeln extrudiert. Besonders bevorzugt werden erfindungsgemäß geschäumte thermoplastische Kunststoffe, insbesondere Polyethylen-, Polypropylen- oder Polystyrolschaumstoffe hergestellt. Erfindungsgemäß wird das Verfahren dabei so durchgeführt, daß man in eine Schmelze der zur Herstellung geschäumter Kunststoffe geeigneten Ausgangsprodukte die Treibmittelzusammensetzung aus verflüssigtem Kohlendioxid und einem weiteren flüssigen physikalischen Treibmittel zumischt und die Polymerisation der Ausgangprodukte für den herzustellenden geschäumten Kunststoff gegebenenfalls unter Aufrechterhaltung eines schwachen Über- oder Unterdruckes während des Aufschäumvorganges durchführt. Für das erfindungsgemäße Verfahren können dabei an sich bekannte Verarbeitungsanlagen, z. B. Extruderanlagen eingesetzt werden. Besonders überraschend ist es dabei, daß es mit dem erfindungsgemäßen Verfahren möglich ist, Kohlendioxid in verflüssigtem Zustand auch bei erhöhter Temperatur, in den Extruder zum Zwecke der Aufschäumung thermoplastischer Polymerschmelzen einzubringen. Im Gegensatz zu den bisher bekannten Verfahren des Standes der Technik ist damit eine problemlose Dosierung des Kohlendioxids möglich. Nach dem erfindungsgemäßen Verfahren gelingt es damit unter Verwendung von Kohlendioxid vorwiegend geschlossenzellige Schaumstoffe von sehr gleichmäßiger feinzelligen Struktur herzustellen. Außerdem zeichnen sich die nach dem erfindungsgemäßen Verfahren erhaltenen geschäumten Kunststoffe durch ein hohen Wärmeisolierungsvermögen aus.

Das erfindüngsgemäße Verfahren zur Herstellung geschäumter Kunststoffe kann dabei so durchgeführt werden, daß man eine in einem Druckbehälter vorkonfektionierte Treibmittelzusammensetzung einsetzt, welche hergestellt wurde, indem man in einem Druckbehälter das flüssige oder unter Druck verflüssigte physikalische Treibmittel in den gewünschten Gswichtsteilen vorlegt und auf an sich bekannte Weise druckverflüssigtes Kohlendioxid in der gewünschten Menge hineindrückt. Es kann nach dem arfindungsgemäßen Verfahren aber auch so vorgegangen werden, daß an die einzusetzende Treibmittelzusammensetzung erst unmittelbar vor dem Autschäurnvorgang der zu verschäumenden Polymere oder polymerisierbaren Komponenten herstellt. Hierbei wird in den entsprechenden Mengen in einem Druckgefäß außerhalb der eigentlichen Extruderanlage verflüssigtes Kohlendioxid in die weitere flüssige Treibmittelkomponente unter einem Druck, unter welchem Kohlendioxid im flüssigen Zustand vorliegt, eingeleitet, wobei sich die Komponenten weitgehend vermischen. Die so erhaltene homogene Mischung aus verflüssigtem Kohlendioxid und flüssiger Treibmittelkomponente wird dann über einen Einlaß für flüssige Treibmittel in die Extruderanlage eingelötet.

Das erfindungsgemäße Verfahren eignet sich sowohl zur Herstellung offenzelliger wie geschlossenzelliger Hart- oder Weichschaumstoffe. Besonders geeignet ist das Verfahren zur Herstellung von geschäumten Polyurethan-Kunststoffen. Hierfür können an sich bekannte PUR-Verarbeitungsanlagen, z. B. Hochdruck- bzw. Niederdruckvermischungsanlagen, welche mit dem nach dem Stand der Technik bekannten statischen Mischem ausgerüstet sind, eingesetzt werden.

In einer Variante zur Herstellung von geschäumten PUR-Kunststoffen können die Treibmittel neben druckverflüssigtem Kohlendioxid und einem oder mehreren flüssigen und/oder unter Druck verflüssigten physikalischen Treibmitteln noch weitere flüssige Zusatzmittel, z. B. Flammschutzmittel, als eine weitere Komponente enthalten. Übliche Flammschutzmittel sind z. B. Phosphatester oder Phosphonate. Besonders gut geeignet sind entsprechende Phosphatester bzw. Phosphonester, die drei Niedrigalkylgruppen bzw. drei, durch ein oder mehrere Halogenatome substituierte Niedrigalkylgruppen aufweisen. Niedrigalkyl bedeutet vorzugsweise C₁- bis C₄-Gruppen. Geeignet sind z. B. Tris-chlorisopropylphosphat, Trichlorisopropylphosphat, Tris-chlorethylphosphat, Trichlorethylphosphat, Trichlorpropylphosphat, Tris-chlorpropylphosphat, Triethylphosphat, Dimethylethylphosphat. Tris-dichlorisopropylphosphat oder Dimethylmethylphosphonat.

Wird das erfindungsgemäße Verfahren zur Herstellung geschäumter PUR-Kunststoffe eingesetzt, so können hierbei alle üblichen Schaumrohstoffe wie z. B. aliphatische, cycloaliphatische oder aromatische Di- oder Polyisocyanate eingesetzt werden. Beispiele für Schaumrohstoffe sind z. B. 2,4- und 2,8-Toluylandiisocyanat, Diphenylmethandiisocyanat, Polymethylenpolyphenylisocyanat und Mischungen davon. Es können auch Carbodilmidgruppen, Urethangruppen, Allophanatgruppen, Isocyanuratgruppen, Hamstoffgruppen oder Biuretgruppen enthaltene Polyisocyanate, die man als 'modifizierte Polyisocyanate" oder "Isocyanat-Prepolymere" bezeichnet, verwendet werden. Bei der Herstellung von geschäumten PUR-Kunststoffen werden Polyisocyanate üblicherweise mit Verbindungen umgesetzt, die mindestens zwei gegenüber lsocyanatgruppen reaktionsfähige Wasserstoffatome enthalten, beispielsweise Hydroxylgruppen aufweisende Verbindungen auf Polyester-, Polyether- und Aminbasis, sowie Amino- und/oder Carboxyl- und/oder Thlolgruppen aufweisende Verbindungen. Weiterhin können alle bei der Herstellung von geschäumten PUR-Kunststoffen eingesetzten Katalysatoren wie z. B. tertiäre Amine und/oder organische Metallverbindungen wie beispielsweise Zinnsalze von Carbonsäuren eingesetzt werden.

Wird das erfindungsgemäße Verfahren zur Herstellung von Polystyrol- oder Polyethylen-Schaumstoffen eingesetzt, können auch hierfür alle an sich bekannten Schaumrohstoffe verwendet werden.

Auf an sich bekannte Weise können dabei zusätzlich zu den Polymeren und/oder polymerisierbaren Bestandteilen alle an sich bekannte Zusatz- oder Hilfsstoffe, beispielsweise Nuklisierungsmittel, Porenregiersubstanzen, Flammschutzmittel, Antistatika, Stabilisatoren, Weichmacher, Vemetzungsmittel, Füllstoffe oder Farbstoffe beigefügt sein.

Eine weitere Ausführungsform der Erfindung betrifft die Herstellung von Ein- oder Mehrkomponenlen-PUR-Schaumstoffen aus Druckbehältem und wird im folgenden erläutert Auch hier verwendet man eine Treibmittelzusammensetzung, die 5 bis 50 Gew.-% verflüssigtes CO₂ enthält

Unter Treibmittelzusammensetzung wird der im Druckbehälter eingeschlossene flüssige Anteil der Treibmittetzusammensetzung, einschließlich der sich im Druckbehälter befindlichen Gasphase verstanden.

Die Treibmittelzusammensetzung enthält bei dieser Variante neben dem flüssigen CO₂ mindestens eine weitere flüssige Komponente. Als weitere flüssige Komponente kann beispielsweise ein flüssiges oder druckverflüssigtes physikalisches Treibmittel enthalten sein. Halogenhaltige Treibmittel sind gut geeignet, halogenfreie Treibmittel sind oft umweltverträglich und vorzuziehen. Gemäß einer besonders vorteilhaften Variante ist flüssiges CO₂ als einziges Treibmittel enthalten, die flüssige weitere Komponente wird durch ein flüssiges Flammschutzmittel aus der Gruppe der Ester der Phosphorsäure oder der Ester der Phosphonsäure gebildet.

Als weitere flüssige Komponenten neben dem druckverflüssigten Kohlendioxid sind alle üblichen flüssigen physikalischen Treibmittel, nämlich leichtflüchtige organische Verbindungen wie Ether, Aceton, Kohlenwasserstoffe wie Pentan, Heptan, Hexan, Benzingemische, halogenhaltige Kohlenwasserstoffe oder halogenhaltige Ether möglich. Auch unter Druck verflüssigte Gase wie z. B. Propan oder Butan können neben dem verflüssigten Kohlendioxid eingesetzt werden.

Vorzugsweise enthalten die Treibmittelzusammensetzungen mehr als 5 Gew-%, insbesondere 5 bis 50, z. B. 5 oder 10 bis 30 Gew-%, verflüssigtes Kohlendioxid.

Bevorzugt sind Traibmittelzusammensetzungen, welche 10 bis 50 Gewichtsteile verflüssigtes Kohlendioxid und 30 bis 90 Gewichtsteile mindestens eines flüssigen oder unter Druck verflüssigten Treibmittels aus der Gruppe der Ether mit insgesamt 2 bis 4 Kohlenstoffatomen, der Ketone mit 3 bis 5 Kohlenstoffatomen, der aliphatischen Kohlenwasserstoffe mit 2 bis 12 Kohlenstoffatomen, der halogenhaltigen Kohlenwasserstoffe mit 1 bis 5 Kohlenstoffatomen oder der halogenhaitigen Ether mit insgesamt 2 bis 6 Kohlenstoffatomen enthalten oder aus einem solchen Gemisch bestehen. Beispiele für aliphatische Kohlenwasserstoffe sind Pentan, Hexan, Heptan sowie Benzinfraktionen, insbesondere Leichtbenzine mit einem Siedepunkt im Bereich von 15 bis 80 °C. Bevorzugt werden die niedersiedenden Fraktionen, wie z. B. Propan und/oder Butan, in druckverflüssigter Form eingesetzt. Beispiele für cyclische Kohlenwasserstoffe sind Cyclopropan, Cyclopentan und Cyclohexan. Unter halogenhaltige Kohlenwasserstoffen werden Wasserstoff enthaltende Fluorkohlenwasserstoffe verstanden. Beispiele für Fluorkohlenwasserstoffe sind Pentafluorethan (R125), 1,1,1,2-Tetrafluorethan (R134a), 1,1,1-Trifluorethan (R143a), 1,1,2-Trifluorethan (R143), 1,1-Difluorethan (R152a), 1,1,1,3,3-Pentafluorpropan (R245fa), Octafluorpropan (R21B) oder 1,1,1,3,3-Pentafluorbutan (RS65mfc). Unter halogenhaltigen Ethern werden Wasserstoff enthaltende Fluorchlor- oder Fluorether, wie z. B. Difluormethoxy-2,2,2-trifluorethan (E245) verstanden. Beispiele für mögliche Ether sind Dimethylether oder Diethylether. Von den Ketonen ist insbesondere Acelon bevorzugt.

Die Treibmittelzusammensetzungen können trei von halogenierten Treibmitteln sein und nur aus verflüssigtem Kohlendioxid als einziger Treibmittel-Komponente bestehen. Bevorzugt sind Abmischungen, die verflüssigtes Kohlendioxid in einer Menge von 20 bis 30 Gewichtsteilen und Butan oder ein Propan/Butan-Gemisch in einer Menge von 50 bis 60 Gewichtsteilen und/oder Aceton in einer Menge von 5 bis 15 Gewichtsteilen enthalten oder daraus bestehen. Als Propan/Butan-Gemisch kann ein an sich übliches Gemisch, beispielsweise ein Gemisch mit einem Dampfdruck von ca. 3,7 bar (abs.) verwendet werden.

Weiterhin bevorzugt sind Treibmittelzusammensetzungen, welche 10 bis 50 Gewichtsteile verflüssigtes Kohlendioxid und 10 bis 90 Gewichtsteile eines halogenhaltigen Kohlenwasserstoffes oder eines halogenhaltigen Ethers, enthalten oder daraus bestehen. Besonders bevorzugt sind dabei Treibmittelzusammensetzungen, welche 10 bis 30 Gewichtsteile verflüssigtes Kohlendioxid und von den halogenhaltigen Kohlenwasserstoffen 10 bis 90 Gewichtsteile 1,1-Difluorethan (R152a) enthalten oder daraus bestehen. Unter den halogenhaltige Ether enthaltenden Zusammensetzungen sind solche Treibmittelzusammensetzungen besonders bevorzugt, welche 15 bis 40 Gewichtsteile verflüssigtes Kohlendioxid und 10 bis 20 Gewichtsteile Difluormethoxy-2,2,2-trifluorethan (E245) enthalten oder daraus bestehen.

In einer anderen besonders bevorzugten Variante können die Treibmittel neben druckverflüssigtem Kohlendioxid als flüssige Komponente als Flammschutzmittel gebräuchliche Phosphatester oder-Phosphonate. Besonders gut geeignet sind Phosphat- bzw. Phosphonester, die drei C1- C4- Alkylgruppen, die gegebenenfalls doch ein oder mehrere Halogenatome substituiert sind, wie z. B. Trischlorisopropylphosphat, Trischlorethylphosphat, Trichlorethylphosphat, Trichlorpropylphosphat, Trischlorpropylphosphat, Triethylphosphat, Dimethylethylphosphat, Tris-dichlorisopropylphosphat oder Dimethylmethylphosphonat, enthalten. Zweckmäßigerweise liegen die Konzentrationen dabei bei 10 bis 50 Gewichtsteilen verflüssigtem Kohlendioxid und 80 bis 100 Gewichtsteilen Phosphatester oder Phosphonat Bevorzugt setzt man Trischlorpropylphosphat ein. Diese besonders bevorzugten Treibmittelzusammensetzungen sind frei von anderen Treibmitteln als CO₂ und deshalb besonders umweltverträglich.

Die Treibmittelzusammensetzungen eignen sich zur Erzeugung von allen bisher bekannten PUR-Schäumen aus Druckbehältem, insbesondere zur Verschäumung t K- und 2K-PUR-Schaumstoffen. Auch für die Herstellung von Mehrkomponenten-PUR-Schaumstoffen, bei denen die Schaumbildner mit mehr als einer reaktiven Komponente separat in einem Druckbehälter abgefüllt sind, können die Treibmittelzusammensetzungen eingeselzt werden. Auch zur Herstellung sogenannter 1,5 K-PUR-Schäume, bei denen im Gegensatz zu den 2K-Schäumen dem Prepolymer kurz vor dem Ausbringen eine zur Umsetzung der Isocyanatgruppen nicht ausreichende Menge einer Polyolkomponente zugesetzt wird, können die Treibmittetzusammensetzungen verwendet werden.

Als sehr vorteilhaft erweisen sich die Treibmittelzusammensetzungen zur Herstellung von 1K- oder 2K-PUR-Schaumstoffen.

In der zu verschäumenden 1K-PUR-Schaumstoffmischung können dabei auf an sich bekannte Weise eine Polyolkomponente, eine Polyisocyanatkomponente, ein Katalysator sowie gegebenenfalls noch als Hilfsstoff ein Flammschutzmittel als weitere Bestandteile neben der Treibmittelzusammensetzung enthalten sein.

Als Polyolkomponente können z. B. Glycerin, Glykole oder Polyetherpolyole, die als Additionsprodukte von Propylenoxid oder Ethylenoxid an mehrwertige Alkohole, Wasser oder Ethylendiamin erhalten wurden, oder Polyesterpolyole, die als Polykondensationsprodukte aus Polyolen mit Dicarbonsäuren oder deren Anhydriden erhalten wurden, oder Gemische derselben in der 1K-PUR-Schaummischung enthalten sein. Eine typische Polyolkomponente kann z. B. ein Gemisch aus einem bromierten Polyetherpolyol (beispielsweise Diol oder Triol) mit einer Hydroxylzahl von 200 bis 350 und einem Polyetherpolyol (z. B. einem Diol) mit einer Hydroxylzahl von 110 sein. Weiterhin sind auch modifizierte Pflanzenöle mit einer OH-Zahl im Bereich von 100 bis 300, z. B. Rizinusöl, möglich.

Als Polyisocyanatkomponente können zum Beispiel Diphenylmethan-4,4'-diisocyanat, Diisocyanatotoluol, 1,5-Diisocyanato-naphthalin, Triisocyanato-triphenylmethan, 1,6-Diisocyanatohexan, vorzugsweise Diphenylmethan-4,4'-Diisocyanat, oder Gemische davon, eingesetzt werden.

Typische Katalysatoren in 1K-PUR-Schaummischungen, die im erfindungsgemäßen Verfahren mit einer Treibmittelzusammensetzung verschäumt werden können, sind organische Amine, Aminoalkohole oder Aminoether, z. B. 2-Dimethylaminoethyl-3-Dimethylaminopropylether, Diethanolamin, Dimethylcyclohexylamin, 2-Dimethylaminoethylether, oder Morpholinverbindungen, wie z. B. 2,2-Dimorpholinodiethylether, N,N-Dimethylaminoethylmorpholin, N-Methylmorpholin. Bevorzugt sind die Morpholinverbindungen, insbesondere 2,2-Dimorpholinodiethylether.

Als übliche Flammschutzmittel können Trischlorisopropylphosphat, Trichlorisopropylphosphat, Trischlorethylphosphat, Trichlorethylphosphat, Trischlorpropylphosphat, Trichlorpropylphosphat, Dimelhylethylphosphat, Trisdichlorisopropylphosphat, Dimethylmethylphosphonat, Dimethylenethylphosphat vorzugsweise Trischlorpropylphosphat, eingesetzt werden.

Als Stabilisatoren sind z. B. Copolymere aus Siloxan geeignet.

Eine zu verschäumende 1 K-PUR-Schaummischung enthält bezogen auf die Schaummischung als 100 Gew.-%, beispielsweise 20 bis 30 Gew.-% einer Polyolkomponente, 40 bis 60 Gew.-% einer Polyisocyanatkomponente, 0,1 bis 3 Gew.-% Katalysator, gegebenenfalls 10 bis 15 Gew.-% eines Flammschutzmittels, gegebenenfalls 1 bis 2 Gew.-% Schaumstabilisator neben 15 bis 35 Gew.-% der Treibmittelzusammensetzung. Eine typische IK-PUR-Schaummischung, die sich vorteilhaft mit Hilfe der Treibmittelzusammensetzung verschäumen läßt, besteht so beispielsweise aus ca. 22,5 Gew.-% einer Polyolkomponente, z. B. aus einem Gemisch eines bromierten Polyetherpolyols mit einer Hydroxylzahl von 200 bis 350 und einem Polyetherpolyol mit einer Hydroxylzahl von 110 im Mischungsverhältnis 1:1, ca. 42,5 Gew.-% einer Polyisocyanatkomponente, z. B. Diphenylmethan-4,4'-diisocyanat, ca. 0,5 Gew.-% einer Katalysatorsubstanz wie z. B. 2,2-Dimorpholinodiethylether, ca. 1,5 Gew.-% Silikonschaumstabilisator, ca. 13 Gew.-% eines Flammschutzmittels wie z. B. Trischlorpropylphosphat, und einem Anteil von ca, 20 Gew.-% der-Treibmittelzusammensetzung. Aus einer derartigen 1K-PUR-Schaummischung kann ein Einkomponentenschaumstoff mit einer gleichmäßigen feinzelligen Struktur und niedriger Rohdichte, z. B. mit einer Rohdichte von ca. 23 bis 25 kg/m³, hergestellt werden.

Von den Einkomponenten-Schaumstoffen unterscheiden sich die 1,5K- und 2K-PUR-Schaumstoffe dadurch, daß die zur Aushärtung des Schaumes benötigte Polyolkomponente im Druckbehälter getrennt von der Prepolymerzusammensetzung gehalten wird und erst unmittelbar vor der Verschäumung dem Prepolymer zugesetzt wird. Als zweite Komponente kommen dabei alle bereits genannten Polyolkomponenten in Frage. Zur schnelleren Aushärtung kann die zweite Komponente darüber hinaus einen üblichen Katalysator, beispielsweise die bereits genannten Amin- oder Morpholin-Verbindungen oder auch metallorganische Verbindungen, wie z. B. Zinndioctoat, Kobaltnaphtenat, Dibutylzinndilaurat oder Eisenacetonylacetat, enthalten.

Die mit den Treibmitlelzusammensetzungen hergestellten 1K-oder Mehrkomponenten-PUR-Schaumstoffe zeigen ein sehr gutes Wärmeisolierungsvermögen und sind daher gut für Dämmzwecke, z. B. im Bau- oder Wohnbereich, geeignet. Auch für die Herstellung von Sprühldebern auf Polyurethanbasis sind die Treibmittelzusammensetzungen geeignet.

Weiterhin umfaßt die Erfindung ein Verfahren zur Herstellung eines 1K-oder 2K-PUR-Schaumstoffes, bei dem man aus einem Druckbehälter, welcher eine PUR-Schaummischung aus einer Polyolkomponente, einem Isocyanatgruppen enthaltenen Prepolymer, einem Katalysator und gegebenenfalls weitere übliche Hilfsstoffe sowie eine der vorstehend beschriebenen Tresbmittelzusammensetzungen enthält, einen PUR-Schaumstoff durch Entspannen des im Druckbehälter herrschenden Überdruckes auf Atmosphärendruck über ein Ventil erzeugt. Entsprechende Druckbehälter sowie für die Verschäumung geeignete Ventile sind allgemein bekannt

Weiterhin betrifft die Erfindung 1K- oder Mehrkomponenten-PUR-Schaumstoffmischungen zur Erzeugung eines PUR-Schaumstoffes aus Druckbehältern, welche eine der vorstehend beschriebenen Treibmittel-Zusammensetzungen enthalten.

Ein weiterer Gegenstand der Erfindung ist ein Verfahren zur Herstellung einer Treibmittelzusammensetzung für die Erzeugung von PUR-Schaumstoffen aus Druckbehältem, bei dem man verflüssigtes Kohlendioxid als Treibmittelkomponente einsetzt. Bei dem erfindungsgemäßan Verfahren wird in einem Druckbehälter die flüssige oder unter Druck verflüssigte physikalische Treibmittelkomponente in den gewünschten Gewichtsteilen vorgelegt und auf an sich bekannte Weise verflüssigtes, üblicherweise druckverflüssigtes, Kohlendioxid in der gewünschten Menge hineingedrückt. In einen Druckbehälter (Aerosoldose), welcher bereits das Prepolymer und gegebenenfalls alle weiteren Komponenten enthält, kann anschließend diese arfindungsgamäßen hergestellte Treibmittelzusammensetzung in der gewünschten Menge injiziert werden. Die Menge an Kohlendioxid wird dabei nur durch den für Aerosoldosen erlaubtan Druck reglementiert (10 bis 18 bar).

Erfindungsgemäß ist es nunmehr möglich, PUR-Schaumstoff-Mischungen enthaltende Druckbehälter herzustellen, welche pro 1 kg-Dose ca. 20 bis 30 g Kohlendioxid enthalten können. Nach bisher verwendeten Verfahren, bei denen Kohlendioxid immer in gasförmiger Form eingesetzt wurde, war es bislang nur möglich, pro 1 kg-Dose nur ca. 3 bis 5 g Kohlendioxid einzubringen. In vorteilhafter Weise ist es erfindungsgemäß jetzt möglich, bei der Herstellung von PUR-Schaumstoffen aus Druckbehältern den Anteil an brennbarem physikalischen flüssigen oder unter Druck verflüssigtem Treibmitteln weiter zu reduzieren. Auch aus Kostengesichtspunkten ist eine Reduzierung der bisher üblichen flüssigen bzw. druckverflüssigten physikalischen Treibmittel äußerst vorteilhaft Mit der erfindungsgemäßen Treibmittelzusammensetzung hergestellter 1K- oder Mehrkomponenten-PUR-Schaumstoffe besitzt eine vorwiegende geschlossenzellige sehr gleichmäßige feinzellige Struktur sowie ein sehr hohes Wärmeisolierungsvermögen. Dementsprechend eignen sich PUR-Schaumstoffe, welche mit einer erfindungsgemäßen Treibmittelzusammensetzung hergestellt wurden, besonders gut für Dämmzwecke im Bau- und Wohnbereich.

Die nachfolgenden Beispiele sollen die Erfindung näher erläutem, ohne sie jedoch in ihrem Umfang zu begrenzen.

### Beispiele

### 1. Herstellung eines Polystyrol-Schaumstoffes

### a) Verflüssigtes Kohlendioxid/R152a als Treibmittel:

Es wurden 200 kg Polystyrol (Schmelzindex 3,0-110) mit 2 kg Talkum als Nuklisierungsmittel vermischt und diese Mischung in eine übliche Extruderanlage eindosiert und aufgeschmolzen. In die Schmelzzone des Extruders wurden über eine Einspritzdüse in die Polystyrolschmelze ca. 6 Gew.-% des Treibmittels, bezogen auf Polystyrol, eindosiert. Die Treibmittelzusammensetzung enthielt 14 Gewichtsteile verflüssigtes Kohlendioxid und 86 Gewichtsteile R152a. Der Dampfdruck dieser Treibmittelzusammensetzung betrug ca. 14 bar bei 20 °C.

In der Mischzone wurde die Polystyrolschmelze mit der Treibmittelzusammensetzung homogen vermischt und anschließend die erhaltene Mischung über eine Düse extrudiert. Man erhielt einen geschlossenzelligen Schaumstoff von gleichmäßiger, feinzeiliger Struktur.

Es wurden sowohl Polystyrol-Schaumfolien als auch Polystyrol-Schaumplatten erfindungsgemäß hergestellt. Eine erfindungsgemäß hergestellte Polystyrol-Schaumfolie besaß eine Dichte von ca. 35 kg/m³ eine erfindungsgemäß hergestellte Polystyrol-Schaumplatte eine Dichte von ca. 33 kg/m³.

### b) Verflüssigtes Kohlendioxid/R152a/Ethanol als Treibmittel:

Wie unter Beispiel 1 a) beschrieben, wurde in eine Polystyrolschmelze ca. 8,5 Gew.-% des Treibmittels, bezogen auf Polystyrol, eindosiert. Die Trebmittelzusammensetzung enthielt 14 Gewichtsteile verflüssigtes Kohlendioxid, 57 Gewichtsteile R152a und 29 Gewichtsteile Ethanol. Der Dampfdruck dieser Treibmittelzusammensetzungen betrug ca. 15 bar bei 20 °C.

Eine erfindungsgemäß hergestellte Polystyrol-Schaumfolie besaß eine Dichte von ca. 36 kg/m³, eine erfindungsgemäß hergestellte Polystyrol-Schaumplatte eine Dichte von ca. 34 kg/m³.

### 2. Herstellung eines Polyethylen-Schaumstoffes (nicht erfindungsgemäß)

### a) Verflüssigtes Kohlendioxid/R152a/R141b als Treibmittel:

200 g Polyethylen (Schmelzindex 3,5-150) wurden unter identischen Bedingungen, wie in Beispiel 1 für Polystyrol-Schaumstoff beschrieben, extrudiert. Es wurden ca. 6 Gew.-% einer Treibmittelmischung, bezogen auf Polyethylen, eindosiert. Eine Treibmittelzusammensetzung aus 14 Gewichtsteilen verflüssigtem Kohlendioxid, 50 Gewichtsteilen R152a und 36 Gewichtsteilen R141b wurde eingesetzt. Es wurde ein feinzelliger Polyethylen-Schaumstoff mit geringer Schrumpfung erhalten. Das hergestellte Polyethylen-Schaumrohr wies eine Dichte von ca 40 kg/m³ auf.

### 3. Herstellung eines PUR-Schaumstoffes

Zur Herstellung des PUR-Schaumstoffes wurde als eine der Ausgangskomponenten eine Polyolmischung, bestehend aus 40 Gewichtsteilen eines Ethylendiamin/-Propylenoxid-Polyethers (OH-Zahl 480), 60 Gewichtsteile eines Sorbitol/Glycerin/Propylenoxid-Polyethers (OH-Zahl 490), 1 Gewichtsteil Schaumstabilisator (Typ DC193 der Dow Coming Corporation) und 1,5 Gewichtsteile Dimethylcyclohylamin eingesetzl. Diphenylmethandiisocyanat wurde als Isocyanatkomponente in einer um 10 Gew.-% erhähten stöchiometrischen Menge eingesetzt. Die PUR-Schaumstoffe wurden auf einer Niederdruckanlage mit einer Austragleistung von ca 8 kg/min, mit der eine Dosierung von 3 Komponenten möglich ist. hergestellt. Als Mischaggregat diente ein statischer Mischer.

### a) Verflüssigtes Kohlendioxid/R141b/Wasser als Treibmittel: (nicht erfindungsgemaß)

Eine Treibmittelzusammensetzung in einer Menge von 30 Gewichtsteilen wurde eingesetzt. Die Treibmittelzusammensetzung bestand aus 13,9 Gewichtsteilen verflüssigtem Kohlendioxid, 85,1 Gewichtsteilen R141b und zusätzlich 1 Gewichtsteil Wasser. Mit dieser Treibmittelzusammensetzung wurde ein PUR-Hartschaumstoff mit einer feinzelligen Struktur und einer Dichte von ca. 24 kg/m³ hergestellt.

### b) Verflüssigtes Kohlendioxid/n-Pentan/Wasser als Treibmittel:

Weiterhin wurde ein PUR-Schaumstoff mit 18 Gewichtsteilen einer Treibmittetzusammensetzung hergestellt. Diese Treibmittelzusammensetzung bestand aus 13,9 Gewichtsteilen verflüssigtem Kohlendioxid und 85,1 Gewichtsteilen n-Pentan und zusätzlich 1 Gewichtsteil Wasser. Mit dieser Treibmittelzusammensetzung wurde ein PUR-Hartschaumstoff mit einer feinzelligen Struktur und einer Dichte von ca. 25,4 kg/m³ erhalten.

### c) Verflüssigtes Kohlendioxid/E245 als Treibmittel:

Weiterhin wurde ein PUR-Schaumstoff mit 35 Gewichtsteilen einer Treibmittelzusammensetzung hergestellt. Diese Treibmittelzusammensetzung bestand aus 14 Gewichtsteilen verflüssigten Kohlendioxid und 85 Gewichtsteilen E245. Mit dieser Treibmittelzusammensetzung wurde ein PUR-Hartschaum mit einer feinzelligen Struktur und einer Dichte von ca. 33,5 kg/m³ erhalten.

### 4. Verflüssigtes Kohlendioxid/Propan/Butan/Aceton als Treibmittel für 1K-PUR-Schaumstoffe:

a) 247 g einer Polyolvormischung, bestehend aus
   73 g Polyetherpolyol (Diol), bromiert, Hydroxidzahl ca. 240,
   73 g Polyetherpolyol (Diol), Hydroxidzahl ca. 110,
   89 g Trischlorpropylphosphat,
   5 g Silikonschaumstabilisator,
   7 g Dimorpholindiethylether,
   wurden in eine Aerosoldose aus Aluminium mit eine Volumen von 1000 cm³ eingefüllt. Es wurden 356 g Diphenylmethan-4,4-Diisocyanat zugegeben und die Aerosoldose mit einem Schaumaerosolventil verschlossen. Eine erfindungsgemäße Treibmittelzusammensetzung wurde hergestellt, indem in einem Druckgefäß 62 g druckverflüssigtes Propan/-Butan und 10 g Aceton vorgelegt und 28 g druckverflüssigtes Kohlendioxid unter Mischen zügegeben wurde. 99 g dieser erfindungsgemäßen Treibmittelzusammensetzung wurden dann über eine übliche Aerosolabfüllvorrichtung in die die Schaumkomponenten enthaltende Aerosoldose injiziert. Die Aerosoldose wurde kurzfristig geschüttelt und für ca. 24 Stunden zur Ausbildung des Prepolymers stehengelassen. Nach Ablauf dieser Zeit war die IK-PUR-Schaumstoffmischung zur Anwendung gebrauchsfertig.
   Die 1K-PUR-Schaummischung wurde mittels der erfindungsgemäßen Treibmittelzusammensetzung aus der Aerosoldose ausgetrieben. Man erhielt einen PUR-Schaumstoff mit einer Rohdichte von ca. 23 kg/m³ von gleichmäßiger, feinzelliger Struktur. Die Schrumpfung des PUR-Schaumstoffes nach einer Lagerung von 7 Tagen bei einer Luftfeuchtigkeit von ca. 90 % betrug im Mittel ca. 5 Längenprozent.
b) Wie unter a) beschrieben, wurde eine Polyolabmischung und eine Polyisocyanat in eine Aerosoldose gleichen Volumens eingefüllt. Als erfindungsgemäße Treibmittelzusammensetzung wurde eine Zusammensetzung aus 50 g Propan/Butan, 7,5 g Aceton und 20 g verflüssigtem Kohlendioxid eingesetzt. Die Herstellung der Treibmittelzusammensetzung und die Abfüllung in die Aerosoldose erfolgte, wie unter a) beschrieben.
   Der mit dieser erfindungsgemäßen Treibmittelzusammensetzung hergestellt PUR-Schaumsloff zeigte eine Rohdichte von ca. 25 kg/m³.

### 5. Verflüssigtes Kohlendioxid/Propan/Butan/R141b als Treibmittel für 1K-PUR-Schaumstoffe: (nicht Erfindungsgemäß)

Eine Polyolabmischung und ein Polyisocyanat wurde, wie in Beispiel 4 beschrieben, in eine Aerosoldose mit einem Volumen von 1000 cm³ eingefüllt. Als Treibmittelzusammensetzung wurde eine Zusammensetzung aus 62 g Propan/Butan, 10 g R141b und 28 g verflüssigtem Kohlendioxid eingesetzt. Die Herstellung der Treibmittelzusammensetzung und deren Abfüllung in die Aerosoldose erfolgte, wie in Beispiel 4 beschrieben.

Der mit dieser Treibmittelzusammensetzung hergestellte PUR-Schaumstoff zeigte eine Rohdichte von ca. 25 kg/m³.

### 6. Verflüssigtes Kohlendioxid/Trichlorpropylphosphat/R141b als Treibmittel für 1K-PUR-Schaumstoffe: (nicht erfindungsgemäß)

214 g einer Polyolabmischung und 356 g Polyisocyanat wurden, wie in Beispiel 4 beschrieben, in eine Aerosoldose mit einem Volumen von 1.000 cm³ eingefüllt. Eine erfindungsgemäße Zusammensetzung wurde hergestellt, indem 100 g Trischlorpropylphosphat und 10 g R141b in einem Druckgefäß vorgelegt und 28 g druckverflüssigtes Kohlendioxid unter Mischen zugegeben wurde. 99 g dieser Treibmittelzusammensetzung wurden, wie in Beispiel 4 beschrieben, in die Aerosoldose abgefüllt.

## Patentansprüche

1. Verfahren zur Herstellung geschäumter Kunststoffe und zur Herstellung von Ein- oder Zweikomponenten-Polyurethanschaumstoffen aus Druckbehältern mit Hilfe von Treibmitteln **dadurch gekennzeichnet, daß** sie ein flussiges Treibmittel enthält bestehend aus verflüssigtem CO₂ und mindestens einer weiteren flüssigen oder unter Druck verflüssigten Komponente aus der Gruppe bestehend aus aliphatischen Kohlenwasserstoffen mit 2 bis 12 Kohlenstoffatomen, vorzugsweise Propan, Butan, Pentan, Hexan; Alkohole mit 1 bis 5 C-Atomen, cyclischen Kohlenwasserstoffen mit 3 bis 12 C-Atomen, Ketone mit 3 bis 5 C-Atomen, Leichtbenzine mit einem Siedepunkt im Bereich von 15 bis 80 °C, Ethern mit insgesamt 2 bis 4 Kohlenstoffatomen, der Fluorkohlenwasserstoffe ausgewählt aus der Gruppe umfassend 1,1-Difluorethan, 1,1,1-Trifluorethan; 1,1,2-Trifluorethan; 1,1,1,2-Tetrafluorethan; Pentafluorethan 1,1,1,3,3-Pentafluorpropan und 1,1,1,3,3-Pentafluorobutan; Phosphatester und Phosphonatester mit 3 C1-C4-Alkylgruppen, die gegebenenfalls durch 1 oder mehr Halogenatome substituiert sind, wobei die Treibmittelzusammensetzung 5 bis 50 Gew,-% verflüssigtes Kohlendioxid enthält.

2. Verfahren nach Anspruch 1, **dadurch gekennzeichnet, daß** man eine Treibmittelzusammensetzung einsetzt, welche 10 bis 20 Gewichtsteile verflüssigtes Kohlendioxid und 30 bis 90 Gewichtsteile mindestens eines flüssigen oder unter Druck verflüssigten Treibmittels aus der Gruppe Butan; Pentan; 1,1-Difluorethan; 1,1,1-Trifluorethan; 1,1,2-Trifluorethan; 1,1,1,2-Tetrafluorethan; Pentafluorethan; 1,1,1,3,3-Pentafluorpropan und 1,1,1,3,3-Pentafluorobutan enthält.

3. Verfahren nach Anspruch 1, **dadurch gekennzeichnet, daß** man eine Treibmittelzusammensetzung, welche 10 bis 20 Gewichtsteile verflüssigtes Kohlendioxid und 30 bis 90 Gewichtsteile 1,1-Difluorethan enthält, einsetzt.

4. Verfahren nach Anspruch 1, **dadurch gekennzeichnet, daß** man eine Treibmittelzusammensetzung, welche 10 bis 20 Gewichtsteile verflüssigtes Kohlendioxid, 50 bis 70 Gewichtsteile 1,1-Difluorethan und 20 bis 35 Gewichtsteile Ethanol enthält, einsetzt.

5. Verfahren nach Anspruch 2, **dadurch gekennzeichnet, daß** man eine Treibmittelzusammensetzung, welche 10 bis 20 Gewichtsteile verflüssigtes Kohlendioxid und 80 bis 90 Gewichtsteile n-Pentan enthält, einsetzt.

6. Verfahren nach Anspruch 1, **dadurch gekennzeichnet, daß** man geschäumte Polyethylen-, Polystyrol- oder Polyurethan-Kunststoffe herstellt.

7. Verfahren zur Herstellung eines Einkomponenten- oder Zweikomponenten-Polyurethanschaumstoffes, **dadurch gekennzeichnet, daß** man aus einem Druckbehälter, welcher ein Isocyanatgruppen enthaltendes Prepolymer, gegebenfalls weitere übliche Hilfsstoffe enthält sowie als Treibmittel eine Treibmittelzusammensetzung, welche 5 bis 50 Gew.-% verflüssigtes Kohlendioxid und mindestens eine flüssige oder unter Druck verflüssigte Komponente aus der Gruppe der Ketone mit insgesamt 3 bis 5 Kohlenstoffatomen, der aliphatischen Kohlenwasserstoffe mit 2 bis 12 Kohlenstoffatomen, der cyclischen Kohlenwasserstoffe mit 3 bis 12 Kohlenstoffatomen, der halogenhaltigen Kohlenwasserstoffe mit 1 bis 5 Kohlenstoffatomen, der Ether mit insgesamt 2 bis 4 Kohlenstoffatomen oder halogenhaltigen Ether mit insgesamt 2 bis 6 Kohlenstoffatomen, Phosphatester und Phosphonatester mit 3 C1-C4-Alkylgruppen, die gebenenfalls durch 1 oder mehr Halogenatome substituiert sind, enthält, einen Polyurethanschaumstoff durch Entspannen des im Druckbehalter herrschenden Überdruckes auf Atmosphärendruck über ein geeignetes Ventil erzeugt.

8. Verfahren nach Anspruch 7, **dadurch gekennzeichnet, daß** man die Treibmittelzusammensetzung in einer Menge von 5 bis 40 Gew.-%, bezogen auf die Gesamtmischung aus Prepolymer und Treibmittelzusammensetzung, einsetzt.

9. Zusammensetzung aus Prepolymer und Treibmittel zur Herstellung eines Einkomponenten- oder Zweikomponenten-Polyurethanschaumstoffes, **dadurch gekennzeichnet, daß** sie eine Treibmittelzusammensetzung enthält, welche 5 bis 50 Gew.-% verflüssigtes CO₂ und mindestens eine flüssige oder unter Druck verflüssigte Komponente aus der Gruppe der Ether mit insgesamt 2 bis 4 Kohlenstoffatomen, der Ketone mit 3 bis 5 Kohlenstoffatomen, der aliphatischen Kohlenwasserstoffe mit 2 bis 12 Kohlenstoffatomen, der cyclischen Kohlenwasserstoffe mit 3 bis 12 Kohlenstoffatomen, der halogenhaltigen Kohlenwasserstoffe mit 1 bis 5 Kohlenstoffatomen oder der Phosphatester und Phosphonatester mit 3 C1-C4-Alkylgruppen, die gegebenenfalls durch 1 oder mehr Halogenatome substituiert sind, enthält.

10. Anordnung zur Herstellung eines Elnkomponentenoder Zwelkomponenten-Polyurethanschaumstoffes, **dadurch gekennzeichnet, daß** sie ein Isocyanatgruppen enthaltendes Prepolymer und eine Trelbmittelzusammensetzung gemäß Ansprüch 9 in einem mit einem Ventil versehenen Druckbehälter enthält.

## Claims

1. Process for the production of foamed plastics and for the production of single-component or dual-component polyurethane foamed materials from pressurised vessels with the aid of foaming agents, **characterised in that** they contain a liquid foaming agent consisting of liquefied CO₂ and at least one other foaming agent which is liquid or has been liquefied under pressure, from the group consisting of aliphatic hydrocarbons with 2 to 12 carbon atoms, preferably propane, butane, pentane, hexane; alcohols with 1 to 5 carbon atoms, cyclic hydrocarbons with 3 to 12 carbon atoms, ketones having 3 to 5 carbon atoms, light petrols with a boiling point within 15 to 80 °C, ethers having a total of 2 to 4 carbon atoms, of hydrofluorocarbons from the group 1,1-difluoroethane, 1,1,1-trifluoroethane; 1,1,2-trifluoroethane; 1,1,1,2-tetrafluoroethane; pentafluoroethane 1,1,1,3,3-pentafluoropropane and 1,1,1,3,3-pentafluorobutane; phosphate ester and phosphonate esters with 3 C1-C4-alkyl groups, optionally substituted by 1 or more halogen atoms whereby the foaming agent composition being used contains 5 to 50 % by weight liquefied carbon dioxide.

2. Process according to Claim 1, **characterised in that** the foaming agent composition used contains 10 to 20 parts by weight liquefied carbon dioxide and 30 to 90 parts by weight of at least one foaming agent which is liquid or has been liquefied under pressure, from the group butane; pentane; 1,1-difluoroethane; 1,1,1-trifluoroethane; 1,1,2-trifluoroethane; 1,1,1,2-tetrafluoroethane; pentafluoroethane; 1,1,1,3,3-pentafluoropropane and 1,1,1,3,3-pentafluorobutane.

3. Process according to Claim 1, **characterised in that** the foaming agent composition used contains10 to 20 parts by weight liquefied carbon dioxide and 30 to 90 parts by weight of 1,1-difluoroethane.

4. Process according to Claim 1, **characterised in that** the foaming agent composition used contains 10 to 20 parts by weight liquefied carbon dioxide, 50 to 70 parts by weight 1,1-difluoroethane and 20 to 35 parts by weight ethanol.

5. Process according to Claim 2, **characterised in that** the foaming agent composition used contains 10 to 20 parts by weight liquefied carbon dioxide and 80 to 90 parts by weight n-pentane.

6. Process according to Claim 1, **characterised in that** foamed polyethylene, polystyrene or polyurethane are produced.

7. Process for producing a single-component or dual-component polyurethane foamed material, **characterised in that** a polyurethane foamed material is produced from a pressurised vessel which contains a prepolymer containing isocyanate groups, optionally additional conventional auxiliaries and a foaming agent composition which contains 5 to 50 % by weight liquefied carbon dioxide and at least one ketone component which is liquid or has been liquefied under pressure of the ketone group having a total of 3 to 5 carbon atoms, aliphatic hydrocarbons with 2 to 12 carbon atoms, cyclic hydrocarbons with 3 to 12 carbon atoms, halogen containing hydrocarbons with 1 to 5 carbon atoms, ethers having a total of 2 to 4 carbon atoms or halogen-containing ethers with a total of 2 to 6 carbon atoms, phosphate ester and phosphonate esters with 3 C1-C4-alkyl groups, optionally substituted by 1 or more halogen atoms and producing polyurethane foamed material by pressure-relieving the superatmospheric pressure prevailing in the pressurised vessel to atmospheric pressure by means of a suitable valve.

8. Process according to Claim 7, **characterized in that** the foaming agent composition is used in a quantity of 5 to 40% by weight, relative to the total mixture of prepolymer and foaming agent composition.

9. A composition consisting of prepolymer and foaming agent for the production of a single-component or dual-component polyurethane foamed material, **characterised in that** the foaming agent composition used contains 5 to 50 % by weight liquefied carbon dioxide and at least one component which is liquid or has been liquefied under pressure of the ether group having a total of 2 to 4 carbon atoms, ketones having 3 to 5 carbon atoms, aliphatic hydrocarbons having 2 to 12 carbon atoms, cyclic hydrocarbons with 3 to 12 carbons atoms or halogen-containing hydrocarbons having 1 to 5 carbons atoms or from the group of phosphate esters and phosphonate esters with 3 C1-C4-alkyl groups, optionally substituted by 1 or more halogen atoms.

10. An arrangement for producing a single-component or dual-component polyurethane foamed material, **characterised in that** it contains a prepolymer containing isocyanate group and a foaming agent composition according to Claim 9 in a pressurised vessel provided with a valve.

## Revendications

1. Procédé de fabrication de matières synthétiques ou plastiques alvéolaires et de fabrication de mousses de polyuréthane à un ou deux composants provenant de récipients sous pression, à l'aide d'agents d'expansion **caractérisés en ce que** l'on utilise une composition d'agent d'expansion liquide contenant du CO₂ liquide et au moins un autre composant liquide ou liquéfié sous pression choisi dans l'ensemble formé par des hydrocarbures aliphatiques ayant 2 à 12 atomes de carbone, de préférence du propane, du butane, du pentane, de l'hexane; des alcools ayant 1 à 5 atomes de carbone, des hydrocarbures cycliques comportant 3 à 12 atomes de carbone, les cétones comportant 3 à 5 atomes de carbone, des essences légères avec un point d'ébullition entre 15 et 80 °C, les éthers ayant au total 2 à 4 atomes de carbone, des hydrocarbures fluorés choisis dans l'ensemble formé par le 1,1-difluoroéthane, 1,1,1-trifluoroéthane; 1,1,2-trifluoroéthane; 1,1,1,2-tétrafluoroéthane; pentafluoroéthane 1,1,1,3,3-pentafluoropropane et 1,1,1,3,3-pentafluorobutane; les esters de phosphate et de phosphonate comportant des groupes d'alkyl 3 C1-C4 éventuellement substitués par un ou plusieurs atomes halogénés, la composition d'agent d'expansion utilisée contenant 5 à 10 % en poids de CO₂ liquide.

2. Procédé selon la revendication 1, **caractérisé en ce que** l'on utilise une composition d'agent d'expansion contenant 10 à 20 parties en poids de dioxyde de carbone liquéfié et 30 à 90 parties en poids d'au moins un agent d'expansion liquide ou liquéfié sous pression, choisi dans l'ensemble des butanes; pentanes; 1,1-difluoroéthanes; 1,1,1-trifluoroéthanes; 1,1,2 trifluoroéthanes; 1,1,1,2-tétrafluoroéthanes; pentafluoroéthanes; 1,1,1,3,3-pentafluoropropanes et 1,1,1,3,3-pentafluorobutanes.

3. Procédé selon la revendication 1, **caractérisé en ce que** l'on utilise une composition d'agent d'expansion contenant 10 à 20 parties en poids de dioxyde de carbone liquéfié et 30 à 90 parties en poids de 1,1-difluoroéthane.

4. Procédé selon la revendication 1, **caractérisé en ce que** l'on utilise une composition d'agent d'expansion contenant 10 à 20 parties en poids de dioxyde de carbone liquéfié, 50 à 70 parties en poids de 1,1-difluoroéthane et 20 à 35 parties en poids d'éthanol.

5. Procédé selon la revendication 2, **caractérisé en ce que** l'on utilise une composition d'agent d'expansion contenant 10 à 20 parties en poids de dioxyde de carbone liquéfié et 80 à 90 parties en poids de n-pentane.

6. Procédé selon la revendication 1, **caractérisé en ce que** l'on produit des mousses de matières plastiques en polyéthylène, en polystyrène ou en polyuréthane.

7. Procédé de fabrication d'une mousse de polyuréthane à un composant ou deux composants, **caractérisé en ce que** l'on produit, provenant d'un récipient sous pression qui contient un prépolymère comportant des groupes isocyanate, éventuellement d'autres adjuvants usuels et, comme propulseur, une composition d'agent d'expansion contenant 5 à 50 % en poids de dioxyde de carbone liquéfié et au moins une composante liquide ou liquéfiée sous pression prise dans l'ensemble formé par les cétones comportant au total 3 à 5 atomes de carbone, les hydrocarbures aliphatiques ayant 2 à 12 atomes de carbone, les hydrocarbures cycliques ayant 3 à 12 atomes de carbone, les hydrocarbures halogénés ayant 1 à 5 atomes de carbone, les éthers ayant au total 2 à 4-atomes de carbone ou les éthers halogénés comportant au total 2 à 6 atomes de carbone, des esters de phosphate et de phosphonate comportant des groupes d'alkyl 3 C1-C4, éventuellement substitués par un ou plusieurs atomes halogénés, une mousse de polyuréthane par détente, à l'aide d'une soupape convenable, de la surpression régnant dans le récipient sous pression jusqu'à la pression atmosphérique.

8. Procédé selon la revendication 7, **caractérisé en ce que** l'on utilise la composition d'agent d'expansion en une quantité de 5 à 40 % en poids, par rapport au mélange total de prépolymère et de composition d'agent d'expansion.

9. Composition de prépolymère et d'agent d'expansion pour la production d'une mousse de polyuréthane à un composant ou deux composants, **caractérisée en ce qu'**elle contient une composition d'agent d'expansion contenant 5 à 50 % en poids de CO₂ liquéfié et au moins une composante liquide ou liquéfiée sous pression prise dans l'ensemble formé par les éthers ayant au total 2 à 4 atomes de carbone, les cétones comportant 3 à 5 atomes de carbone, les hydrocarbures aliphatiques ayant 2 à 12 atomes de carbone, les hydrocarbures cycliques ayant 3 à 12 atomes de carbone, les hydrocarbures halogénés ayant 1 à 5 atomes de carbone ou les esters de phosphate et de phosphonate comportant des groupes d'alkyl 3 C1-C4, éventuellement substitués par un ou plusieurs atomes halogénés.

10. Dispositif pour la préparation d'une mousse de polyuréthane à un composant ou à deux composants, **caractérisé en ce qu'**il contient un prépolymer comportant des groupes isocyanate et une composition d'agent d'expansion selon la revendication 9, dans un récipient sous pression munie d'une soupape.
